# EUROPÄISCHE PATENTSCHRIFT

(11) **EP 0 880 385 B1**
(45) Veröffentlichungstag und Bekanntmachung des Hinweises auf die Patenterteilung: **13.06.2001**
(21) Anmeldenummer: 97901560.9
(22) Anmeldetag: 20.01.1997
(51) Int. Cl.: B01D 1/06

(54) **VERFAHREN UND VERDAMPFER ZUR VERDAMPFUNG OXIDATIONSEMPFINDLICHER VERBINDUNGEN**
METHOD AND VAPORIZER FOR VAPORIZING OXIDATION-SENSITIVE COMPOUNDS
PROCEDE ET VAPORISATEUR POUR LA VAPORISATION DE COMPOSES SENSIBLES A L'OXYDATION

(30) Priorität: 25.01.1996 DE 19602640
(43) Veröffentlichungstag der Anmeldung: 02.12.1998
(73) Patentinhaber: BASF AKTIENGESELLSCHAFT, 67056 Ludwigshafen (DE)
(72) Erfinder: MOHR, Jürgen, D-67269 Grünstadt (DE); VANSANT, Frans, B-2920 Kalmthout (BE); POLT, Axel, Werner, D-67146 Deidesheim (DE); SCHOLL, Stephan, D-67098 Bad Dürkheim (DE); KRÜGER, Siegfried, D-67346 Speyer (DE); STAATZ, Hartmut, D-69124 Heidelberg (DE)
(74) Vertreter: Isenbruck, Günter, Dr.
(86) Internationale Anmeldenummer: EP9700245
(87) Internationale Veröffentlichungsnummer: WO9726970

(56) Entgegenhaltungen:
- EP-A- 0 059 941
- WO-A-92/20419
- WO-A-95/05226
- CH-A- 378 290
- DE-A- 3 338 488
- DE-A- 3 643 816
- DE-A- 3 904 357
- FR-A- 2 254 517
- PATENT ABSTRACTS OF JAPAN vol. 009, no. 184 (C-294), 30.Juli 1985 & JP 60 054702 A (TOUYOU ENGINEERING KK), 29.März 1985,

## Beschreibung

Die vorliegende Erfindung betrifft einen Verdampfer und ein Verfahren zur Verdampfung einer Glykole enthaltenden Flüssigkeit.

Eine Vielzahl von Verdampfern wird für die unterschiedlichsten Anwendungen in der Technik eingesetzt. Beispiele sind Kesselverdampfer, Röhrenverdampfer, Dünnschichtverdampfer, Kurzwegverdampfer, Plattenverdampfer sowie spezielle Verdampfer für höchstviskose Lösungen, für inkrustierende und agressive Lösungen (s. beispielsweise Ullmanns Enzyklopädie der Technischen Chemie, 4. Aufl., Bd. 2, S. 650 - 663).

Zu den Röhrenverdampfern zählen Selbst- und Zwangsumlaufverdampfer, Schrägrohrverdampfer; Schnellumlaufverdampfer, Durchlaufverdampfer, Kletterfilmverdampfer und auch Fallstrom- bzw. Fallfilmverdampfer.

Diese Verdampfer werden auch zur Verdampfung von Glykole enthaltenden Flüssigkeiten eingesetzt.

Eine solche Flüssigkeit fällt beispielsweise bei der Herstellung von Glykolen, insbesondere Ethylenglykol an. Beim technischen Verfahren zur Ethylenglykolherstellung wird Ethylenoxid mit einem etwa zehnfachen molaren Überschuß an Wasser entweder bei Normaldruck und Temperaturen von 50 -70°C in Gegenwart eines Katalysators oder bei einem Überdruck von 20 - 40 bar und einer Temperatur von 140 - 230°C ohne Katalysator umgesetzt. Die Herstellung des Ethylenglykols erfolgt dabei fast ausschließlich in einem der Direktoxidation von Ethylen nachgeschalteten Reaktor. Die anfallende wäßrige Rohglykollösung wird dabei in Verdampfern auf ca. 30 % aufkonzentriert und in mehreren Vakuumkolonnen fraktioniert destilliert (K. Weissermel, H.-J. Arpe, Industrielle organische Chemie, VCH Verlagsgesellschaft, 3. Aufl., S. 161).

Glykole sind, besonders bei höherer Temperatur, oxidationsempfindlich. Sie werden insbesondere zu Aldehyden oxidiert. Für bestimmte Verwendungen, beispielsweise für die Herstellung von Polyestern, wird eine besonders hohe Reinheit des Ethylenglykols gefordert (99,9 Gew.-%). Diese Glykole müssen spezifische Werte für die Siedegrenzen, den Wassergehalt und die Säurezahl einhalten (s. Ullmanns Enzyklopädie der Technischen Chemie, 4. Aufl., Bd. 8, S. 200- 210; K. Weissermel, H.-J. Arpe, a.a.O., S. 162).

Es ist ferner bekannt, zur Gewinnung von temperaturempfindlichen Produkten eine thermisch schonende Destillation auszuführen mittels eines mit einer Destillationskolonne verbundenen Fallfilmverdampfers, wobei das temperaturempfindliche Produkt durch separate Abführung des Fallfilmverdampferablaufs, getrennt von dem aus der Destillationskolonne abgezogenen Umlaufstrom, gewonnen wird. Dieses Destillationsverfahren führt zu einer Absenkung des Siedetemperaturniveaus des zu trennenden Stoffgemisches und damit zu einer thermisch schonenden Verdampfung (s. DE-C 3 338 488).

CH-A-378 290 betrifft ein Verfahren und eine Vorrichtung zur gleichmäßigen Verteilung der einzudampfenden Flüssigkeit auf die Heizrohre eines Fallstromverdampfers. Mit Hilfe eines Lochkastenverteilers und einer mit Löchern versehenen unteren Platte wird ein Flüsigkeitsstrom gleichmäßig auf eine Anzahl an Verdampferrohren verteilt, wobei die Flüssigkeit einen gleichmäßigen, in starker Bewegung gehaltenen Film bilden soll, welcher die gesamte verfügbare Heizfläche benetzt. Es wird nicht explizit ausgeführt, was unter empfindlichen Flüssigkeiten verstanden wird. Aus der Beschreibung ist jedoch herleitbar, daß es sich um mindestens zwei Stoffgemische handelt, wobei die Konzentration eines Stoffes durch Verdampfen des anderen Stoffes erhöht werden soll, um den geforderten Grad der Konzentration zu erreichen. Zudem soll verhindert werden, daß durch zu hohe Konzentration das Produkt antrocknen oder festbrennen kann. Die Verwendung von Glykole enthaltenden Flüssigkeiten ist nicht erwähnt. Es ist zudem nicht ausgeführt, daß die eingesetzten Fallstromverdampfer einen wärmeisolierten oberen Rohrboden und/oder unteren Rohrboden aufweisen.

Aufgabe der vorliegenden Erfindung ist es, einen Verdampfer zur Verdampfung von Glykole enthaltenden Flüssigkeiten bereitzustellen, bei dem die Oxidation der Glykole vermieden wird.

Eine weitere Aufgabe der Erfindung ist die Bereitstellung eines Verfahrens zur Verdampfung einer Glykole enthaltenden Flüssigkeit, bei dem die Verdampfung unter schonenden Bedingungen ausgeführt wird.

Die vorgenannten Aufgaben werden gelöst durch einen Fallfilmverdampfer, umfassend eine heizbare feste Oberfläche (16) in Form von Verdampferrohren, eine Vorrichtung (2, 3) zum Erhitzen der Verdampferrohre und eine Vorrichtung (10) zum Zuführen einer verdampfbare Verbindungen enthaltenden Flüssigkeit zu den Verdampferrohren, dadurch gekennzeichnet, daß die Vorrichtung zum Zuführen der Flüssigkeit, die einen oder mehrere hintereinander geschaltete Lochkastenverteiler (12, 14) umfaßt, so ausgebildet und im Verdampfer angeordnet ist, daß im wesentlichen die gesamte heizbare Oberfläche der Verdampfrohre im Betrieb mit der Flüssigkeit in Kontakt steht, wobei der obere Rohrboden (17) und/oder der untere Rohrboden (26) wärmeisoliert sind und durch ein Verfahren zur Verdampfung einer Glykole enthaltenden Flüssigkeit in diesem Verdampfer, in dem die Flüssigkeit zur Verdampfung in Kontakt mit einer erhitzten festen Oberfläche gebracht wird, wobei im wesentlichen die gesamte erhitzte feste Oberfläche von der Flüssigkeit vollständig benetzt wird.

Ein Beispiel einer im erfindungsgemäßen Verfahren bzw. mit dem erfindungsgemäßen Verdampfer verdampfbaren Flüssigkeit ist eine Ethylenglykol enthaltende Flüssigkeit.

Bei den bekannten Verfahren zur Herstellung von Ethylenglykol fällt eine wäßrige Ethylenglykollösung an, die dann in mehreren Stufen aufkonzentriert wird. Sodann wird das Rohglykol durch Fraktionierung gereinigt.

Wie alle Alkohole ist auch Ethylenglykol oxidationsempfindlich gegenüber thermischer Oxidation (Autoxidation), als auch katalytischer Oxidation. Die Oxidationsprodukte sind dabei Aldehyde (Glykolaldehyd, Glyoxal, Formaldehyd, Acetaldehyd), wie auch die entsprechenden Säuren.

Insbesondere bei der Verwendung des Ethylenglykols in der Polyesterherstellung ist die Anwesenheit dieser Oxidationsprodukte sehr unerwünscht und muß, soweit möglich, vermieden werden.

Die zur Reinigung des Ethylenglykols bekannten Destillationsverfahren und Apparaturen sind in der eingangs erwähnten Literatur beschrieben. Meist werden dabei in einer Reihe hintereinander geschalteter Kolonnen zunächst Wasser, dann Glykol, dann die höheren Glykolether kontinuierlich gewonnen.

Aus Korrosionsgründen müssen dabei normalerweise bestimmte pH-Werte im schwach alkalischen Bereich in den Kolonnenzuläufen eingestellt werden, was in der Regel durch Eintragen von Alkalien erreicht wird.

Da auch die Dampfräume solcher Destillationsapparaturen korrosionsempfindlich sind, müssen auch hier Alkalien mit Hilfe spezieller Sprühtechniken verwendet werden. Besonders bevorzugt wird jedoch der selbst gasförmige und somit leicht verteilbare Ammoniak verwendet.

Als Verdampfer dieser Destillationsapparaturen können unterschiedliche Verdampfer verwendet werden, wobei erfindungsgemäß Fallfilmverdampfer eingesetzt werden.

Üblicherweise wird zur Herstellung von Destillationsapparaturen technischen Maßstabs Kohlenstoff-Stahl verwendet.

Die Verdampfung wird wegen der hohen Siedepunkte von Ethylenglykol (197,6°C) und seiner Homologen in der Regel unter vermindertem Druck durchgeführt.

Unter vermindertem Druck weist jedoch jede Destillationsapparatur unabhängig von ihrer Größe eine gewisse Leckrate auf, d.h. Undichtigkeiten, durch die Gase der umgebenden Atmosphäre in die Apparatur gelangen.

Somit gerät in der Regel auch atmosphärischer Sauerstoff in die Vakuumdestillationsapparatur und ermöglicht die Bildung der vorstehend genannten Oxidationsprodukte des Glykols.

In bestimmten Fällen wurden in technischen Anlagen sehr starke Anstiege der Aldehydanteile im destillierten Glykol festgestellt, die nicht ohne weiteres geklärt werden konnten.

Erfindungsgemäß wurde nun gefunden, daß die Oxidation von Glykol in der Destillationsapparatur sehr stark gefördert wird durch den Kontakt von Glykol in der Dampfphase mit Eisenteilchen, wie sie in einer aus Kohlenstoff-Stahl bestehenden Anlage zwangsläufig in mehr oder weniger großen Mengen im Flüssigkeitsstrom mitgeführt werden. Diese Eisenteilchen oder Eisenoxidteilchen, wie Magnetitteilchen, können als Katalysator bei der Oxidation von Glykoldampf wirken. Diese katalytische Oxidation ist wesentlich schneller als die Autoxidation, also die direkte Reaktion von Glykol mit Sauerstoff ohne einen Katalysator.

Es wurde ferner erfindungsgemäß gefunden, daß eine erhöhte Aldehydbildung durch Glykoloxidation unterblieb, wenn die Eisen- oder Eisenoxidteilchen keinen direkten Kontakt mit der Dampfphase aus dem Verdampfer hatten, beispielsweise, wenn sich die Eisenteilchen oder Magnetitteilchen unterhalb der Flüssigkeitsoberfläche im Destillationssumpf befanden.

Bei der katalytischen Oxidation in der Dampfphase an Eisen tritt gleichzeitig eine Korrosion der Eisenoberflächen auf, bei der in erster Linie Magnetit gebildet wird.

Erfindungsgemäß wurde nun gefunden, daß die Oxidation des Glykols oder anderer oxidationsempfindlicher Verbindungen in einem Verdampfer verhindert werden kann, wenn ein direkter Kontakt zwischen einer gebildeten Dampfphase und den erhitzten festen Oberflächen des Verdampfers, an denen die Flüssigkeit verdampft wird, weitgehend vermieden wird.

Hierdurch wird sichergestellt, daß die Dampfphase keinen Kontakt zu Eisenteilchen oder Eisenoxidteilchen, wie Magnetitteilchen, haben kann.

Dies wird gemäß der Erfindung in einem Fallfilmverdampfer dadurch erreicht, daß im wesentlichen die gesamte erhitzte feste Oberfläche des Verdampfers mit der zu verdampfenden Flüssigkeit stets vollständig benetzt ist. Hierdurch wird ein Kontakt der produktseitigen Dampfphase mit den erhitzten festen Oberflächen vermieden, wie auch eine Ablagerung von ggf. in der Flüssigkeit mitgeführten Eisenteilchen oder Eisenoxidteilchen an der erhitzten festen Oberfläche, wodurch ein Kontakt dieser Teilchen mit der Dampfphase ermöglicht würde. Unter der im wesentlichen gesamten erhitzten festen Oberfläche ist die Oberfläche zu verstehen, die durch das Beheizungsmedium, z.B. kondensierenden Wasserdampf oder ein anderes geeignetes Wärmeträgermedium erhitzt wird. Gemäß einer Ausführungsform der Erfindung müssen solche festen Oberflächen des Verdampfers nicht mit der zu verdampfenden Flüssigkeit in Kontakt stehen, wenn mittels geeigneter Vorrichtungen ein Erhitzen durch das Beheizungsmedium, z.B. Wasserdampf, unterbunden wird.

Gemäß einer Ausführungsform der Erfindung müssen solche erhitzten festen Oberflächen des Verdampfers nicht mit der zu verdampfenden Flüssigkeit in Kontakt stehen, an die aufgrund geeigneter Vorrichtungen der Dampf der verdampften Flüssigkeit nicht gelangen kann und die somit keinen Kontakt mit der Dampfphase des Produkts haben können.

Gemäß einer bevorzugten Ausführungsform besteht die erhitzte feste Oberfläche des Verdampfers aus korrosionsbeständigem Stahl. Dies dient der Vermeidung einer Oberflächenoxidation (Ausbildung einer Magnetitschicht). Durch diese Maßnahme wird weiterhin der Kontakt von Dampf mit Eisenteilchen oder Eisenoxidteilchen, wie Magnetitteilchen, unterbunden.

Der erfindungsgemäße Verdampfer kann als Sumpfverdampfer einer Rektifizierkolonne verwendet werden, wobei der Sumpfverdampfer und die Rektifizierkolonne einen getrennten Sumpf aufweisen können. Dies ist im Ausführungsbeispiel näher erläutert.

Beispiele für einsetzbare Glykole sind Ethylenglykol, Propylenglykol und Butylenglykol. Besonders bevorzugt wird Ethylenglykol eingesetzt.

Die Glykole können gemäß einer Ausführungsform der Erfindung dem Verdampfer in reiner Form zugeführt werden. Sie können ggf. Verunreinigungen oder Nebenprodukte enthalten. Gemäß einer weiteren Ausführungsform der Erfindung werden die verdampfbaren oxidationsempfindlichen Verbindungen in mindestens einer Flüssigkeit dem Verdampfer zugeführt, üblicherweise einem verwendeten Reaktionsmedium oder Lösungsmittel. Die Flüssigkeit kann auch aus einem Produktgemisch bestehen.

In der Regel wird als Flüssigkeit das Medium verwendet, in dem das zu verdampfende Glykol bei der Synthese anfällt. Gemäß einer Ausführungsform, bei der Ethylenglykol verwendet wird, ist dies hauptsächlich Wasser.

Gemäß einer Ausführungsform der Erfindung findet die Verdampfung unter vermindertem Druck statt, insbesondere dann, wenn das Glykol einen hohen Siedepunkt aufweist. Beispielsweise findet die Verdampfung von Ethylenglykol bei vermindertem Druck statt, üblicherweise bei Drücken von 50 - 300 mbar, typischerweise etwa 200 mbar.

Insbesondere bei der Verdampfung unter vermindertem Druck besteht die Gefahr, daß durch Undichtigkeiten in der Apparatur atmosphärischer Sauerstoff in den Verdampfer eindringt und eine Oxidation der Glykole begünstigt.

Gemäß einer Ausführungsform der Erfindung wird die Flüssigkeit im Verdampfer als umlaufender Sumpf geführt, insbesondere dann, wenn nicht der gesamte Zulauf in dem Verdampfer verdampft wird.

Nachstehend wird das erfindungsgemäße Verfahren an einem Beispiel einer bevorzugten Ausführungsform erläutert.

Die bevorzugte Ausführungsform wird erläutert in bezug auf die Figuren, in denen
- Fig. 1: die Verschaltung einer Kolonne und eines Fallfilmverdampfers mit getrenntem Sumpf schematisch zeigt,
- Fig. 2: den oberen Teil des Fallfilmverdampfers mit zweistufigem Lochkastenverteiler und oberem Rohrboden mit Zwischenboden in einer Querschnittsansicht zeigt, und
- Fig. 3: den unteren Bereich des Fallfilmverdampfers mit dem Austrittsbereich für Heizmittel und Produkt in einer Querschnittsansicht zeigt.

Die nachstehend beschriebene bevorzugte Ausführungsform der Verdampfungsanlage ist geeignet zur Durchführung des erfindungsgemäßen Verfahrens, insbesondere zur Verdampfung und Reinigung von ethylenglykolhaltigen wäßrigen Flüssigkeiten.

Der Fallfilmverdampfer ermöglicht eine geringe Temperaturbeanspruchung des Produktes aufgrund der kurzen Verweilzeit bei hoher Temperatur, dem geringen Druckverlust und daraus resultierend der geringen Erhöhung der Siedetemperatur gegenüber isobaren Bedingungen sowie der geringen treibenden Temperaturdifferenz zwischen Produkt und Heizmedium.

Vorliegend wird der Fallfilmverdampfer in einer Fahrweise mit getrenntem Sumpf betrieben. Dies vermeidet bei dem System Ethylenglykol/Wasser eine Temperaturüberhöhung des Sumpfproduktes bei unveränderter Sumpfproduktqualität. Die Fahrweise mit getrenntem Sumpf ist ausführlich beschrieben in der DE-PS 3 338 488.

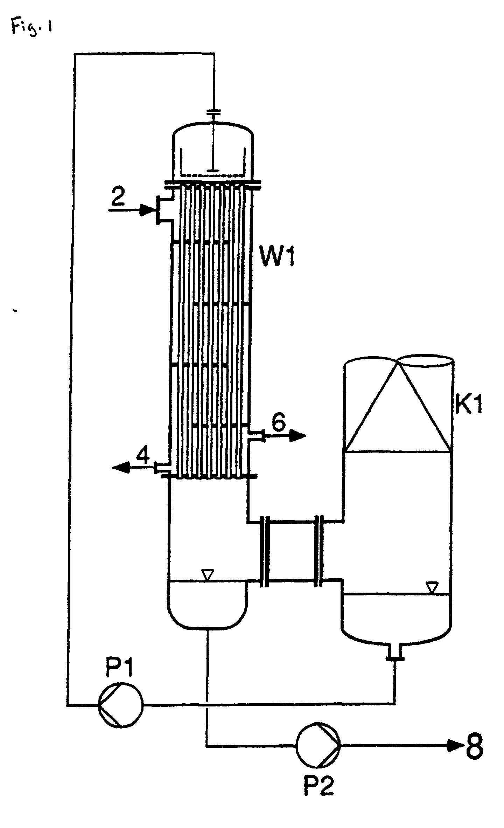

Die Verschaltung des Fallfilmverdampfers mit der Rektifikationskolonne ist in Fig. 1 dargestellt. Hierbei bezeichnet W1 den Fallfilmverdampfer mit einem Einlaß 2 für Heizdampf und Auslässen 4 für Kondensat und 6 für nicht kondensierte Gase, K1 die nur im unteren Teil dargestellte Rektifikationskolonne, P1 die Pumpe zur Führung des Kolonnensumpfes in die Verteileinrichtung am oberen Rohrboden des Fallfilmverdampfers W1 und P2 die Pumpe zum Austragen des Sumpfproduktes 8 aus dem Fallfilmverdampfer.

Der Sumpf der Rektifikationskolonne Kl wird über Pumpe P1 der Verteileinrichtung am oberen Rohrboden des Fallfilmverdampfers Wl zugeführt, in dem eine Reihe von Rohren senkrecht angeordnet sind, wie dargestellt. Der Fallfilmverdampfer wird über Heizdampf 2 geheizt, wobei Kondensat 4 und nicht kondensierte Gase 6 getrennt abgezogen werden. Der Sumpf des Fallfilmverdampfers wird über Pumpe P2 abgezogen. Der Umlaufstrom des Sumpfes aus der von den untersten Einbauten der Kolonne ablaufenden Flüssigkeit auf den Fallfilmverdampfer über Pumpe P1 muß so gesteuert werden, daß alle Verdampferrohre ausreichend mit Flüssigkeit versorgt werden. Die Menge der zugeführten Flüssigkeit muß so groß sein, daß am Ablauf der Rohre des Fallfilmverdampfers noch genügend Flüssigkeit zur Ausbildung eines stabilen Flüssigkeitsfilmes über den gesamten Umfang der Verdampfungsrohre des Fallfilmverdampfers vorhanden ist. Auf diese Weise wird ein direkter Kontakt von Dampfphase, die glykolhaltig ist, mit der beheizten Rohrinnenseite des Fallfilmverdampfers vermieden.

Der dem Fallfilmverdampfer zugeführte Flüssigkeitsstrom wird somit vorzugsweise nur teilweise verdampft. Die erzeugten Brüden (der Dampf) strömen zusammen mit der nicht verdampften Flüssigkeit (wieder) zur Kolonne, sofern der Sumpf des Verdampfers angefüllt ist, der sich als vom Sumpf der Kolonne getrennter Sumpfablauf unterhalb der Verdampferrohre befindet. Aus diesem getrennten Sumpf des Sumpfproduktstroms der nicht verdampften Flüssigkeit am Austritt des Sumpfverdampfers wird das Sumpfprodukt mittels Pumpe P2 entnommen.

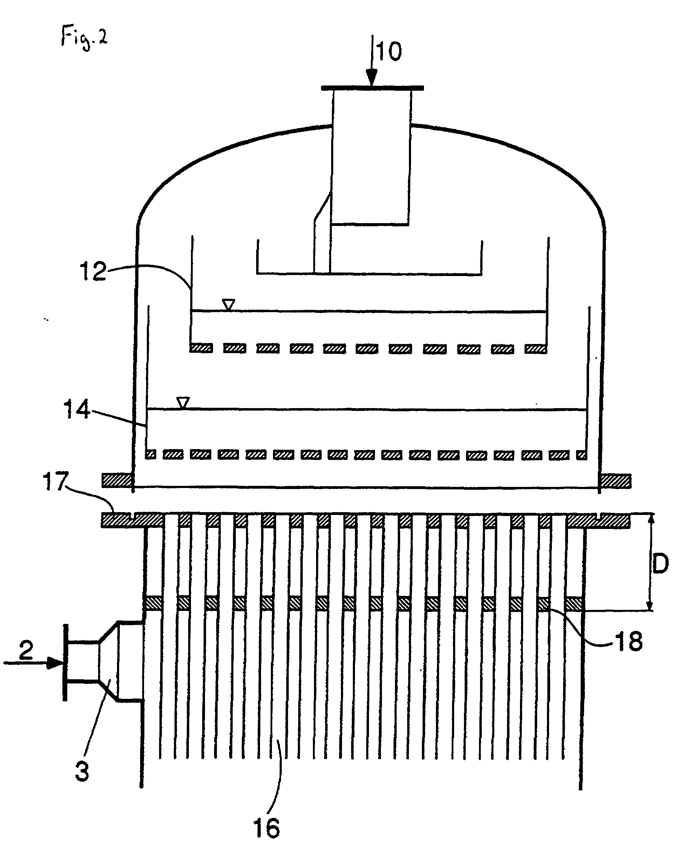

Die dem Fallfilmverdampfer W1 zugeführte Flüssigkeit muß gleichmäßig auf sämtliche Verdampferrohre 16 verteilt werden, um die vorstehend beschriebene Ausbildung eines stabilen Flüssigkeitsfilmes in allen Verdampferrohren zu gewährleisten. Die gleichmäßige Verteilung der Flüssigkeit kann erfindungsgemäß mittels eines zweistufigen Lochkastenverteilers erreicht werden, wie er in Fig. 2 dargestellt ist.

Der Zulauf der zu verdampfenden Flüssigkeit erfolgt über Rohr 10, wonach er über einen Vorverteiler 12 und einen Hauptverteiler 14 gleichmäßig über die gesamte Eintrittsfläche der Verdampferrohre 16 verteilt wird. Die zwei Lochkästen (Vorverteiler 12 und Hauptverteiler 14) müssen dabei so angeordnet werden, daß sämtlichen Verdampferrohren etwa gleichmäßig viel Flüssigkeit zugeführt wird. Die Flüssigkeit tritt sodann in die Verdampferrohre ein, an deren Wänden sie nach unten rieselt und teilweise verdampft wird. Der Zustrom der Flüssigkeit wird dabei so geregelt, daß nicht sämtliche Flüssigkeit verdampft wird, sondern sich auch noch am unteren Rohrende ein stabiler Flüssigkeitsfilm befindet, der die gesamte Innenwand des Rohrs bedeckt.

Die zur Verdampfung nötige Energie liefert Heizdampf, der über den Eintritt 2 dem Fallfilmverdampfer zugeführt wird, insbesondere über einen Dampfdom bzw. Dampfgürtel 3. Auch können andere geeignete Wärmeträgermedien, z.B. hochsiedende örganische Verbindungen, eingesetzt werden.

Der obere Rohrboden und/oder der untere Rohrboden sind wärmeisoliert.

Gemäß einer Ausführungsform der Erfindung ist der obere Rohrboden des Fallfilmverdampfers wärmeisoliert ausgeführt. Dadurch wird sichergestellt, daß keine beheizten Bestandteile des Fallfilmverdampfers frei von einem Flüssigkeitsfilm sind. Es kann nämlich nicht ausgeschlossen werden, daß sich auf dem oberen Rohrboden von vorgeschalteten Aggregaten eingeschleppte Eisenoxid- bzw. Magnetitpartikel ablagern. Diese Partikel können zumindest teilweise Kontakt mit der glykolhaltigen Dampfphase haben, wenn der obere Rohrboden 17 nicht wärmeisoliert ist. Normalerweise steht der obere Rohrboden 17 an seiner Unterseite in direktem Kontakt mit dem Heizmedium, das meist Wasserdampf ist. Zur Vermeidung dieses direkten Kontaktes ist unterhalb des oberen Rohrbodens gemäß einer Ausführungsform der Erfindung ein Zwischenboden 18 eingezogen, wie er in Fig. 2 dargestellt ist Der Zwischenraum zwischen oberem Rohrboden 17 und dem Zwischenboden 18 kann gemäß einer Ausführungsform der Erfindung mit einem geeigneten Isolationsmaterial ausgefüllt werden. Das Eindringen von Heizdampf in den Zwischenraum zwischen dem oberen Rohrboden und dem Zwischenboden kann auch dadurch verhindert werden, daß die Toleranzen der Durchführbohrungen für die Verdampferrohre 16 am Zwischenboden 18 minimiert werden, so daß möglichst kein Zwischenraum zwischen den Verdampferrohren 16 und dem Zwischenboden 18 bestehen bleibt. Der Abstand D zwischen dem oberen Rohrboden und dem Zwischenboden kann dabei gemäß einer Ausführungsform der Erfindung 20 - 200 mm betragen.

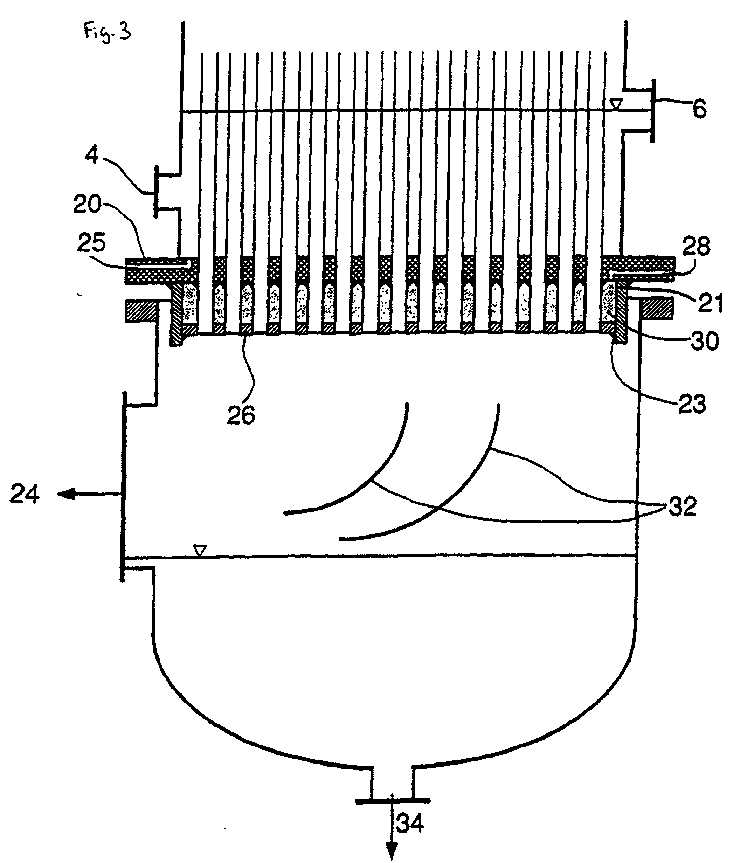

Gemäß einer Ausführungsform der Erfindung ist der untere Rohrboden wärmeisoliert, gemäß einer weiteren Ausführungsform der Erfindung sowohl der obere als auch der untere Rohrboden. Die Isolierung des unteren Rohrbodens ist aus Fig. 3 ersichtlich. Dabei ragen die Verdampferrohre 16 durch den unteren Rohrboden 20 nach unten hindurch, vorzugweise soweit, wie es die Konstruktion des Fallfilmverdampfers erlaubt bzw. erfordert. Dies kann beispielsweise dadurch begrenzt sein, daß die Verdampferrohre mit dem unteren Rohrboden von unten verschweißt werden müssen, wie es in Fig. 3 dargestellt ist. Am unteren Rohrboden ist an der Unterseite ein kreisförmiger Ring 21 angebracht, der an der Unterseite mit einem Abdeckblech 26 verbunden ist, das die Unterseite der Rohre 16 abschließt. Der Raum zwischen den Rohren 16, dem unteren Rohrboden 20 und dem Abdeckblech 26 kann dabei mit einem Isolationsmaterial 30 ausgefüllt sein. Das Abdeckblech 26 schirmt dabei das Isolationsmaterial 30 gegenüber der Dampfphase ab. Durch diese erfindungsgemäße Auslegung des unteren Rohrbodens wird ein Aufheizen des Abdeckbleches 26 vermieden und somit ein direkter Kontakt von trockenen, beheizten Flächen mit glykolhaltiger Dampfphase.

Gemäß einer weiteren Ausführungsform der Erfindung wird der Zwischenraum zwischen dem unteren Rohrboden 20 und dem Abdeckblech 26 nicht mit Isolationsmaterial 30 ausgefüllt, sondern durch Spülung mit einer geeigneten Flüssigkeit oder einem geeigneten Gas, beispielsweise mit Kühlwasser definiert gekühlt. Dazu muß der Zwischenraum zwischen dem unteren Rohrboden 20 und dem Abdeckblech 26 allseitig abgedichtet sein. Die Zuführung und Abführung des Kühlmediums kann dabei durch Öffnungen 28 erfolgen, wie sie in Fig. 3 als Entlüftungsöffnung für den Zwischenraum dargestellt sind.

Gemäß einer Ausführungsform der Erfindung ist eine größtmögliche Fläche des Rohrbodens, d.h. des oberen und/oder unteren Rohrbodens durch Rohre ausgefüllt. Der Rohrboden ist vorzugsweise voll berohrt, um eine möglichst kleine Rohrbodenfläche bereitzustellen, die zur Ausbildung nicht mit einem Flüssigkeitsfilm benetzter, erhitzter Flächen rühren könnte.

Gemäß einer Ausführungsform der Erfindung können am unteren Rohraustritt des Fallfilmverdampfers zur Verminderung des Druckverlustes sowie zur Abschirmung der Flüssigkeitsoberfläche im Verdampfersumpf Strömungsleitbleche 32 angeordnet sein, wie sie beispielsweise in Fig. 3 dargestellt sind. Über einen Stutzen 24 werden die Brüden, d.h. der Dampf, einer Kolonne K1 zugeführt. Über den Stutzen 34 kann das Sumpfprodukt des Verdampfers abgezogen werden über Pumpe P2.

Der Fallfilmverdampfer W1 kann mit jedem geeigneten Wärmemedium betrieben werden. Vorzugsweise wird er aus energetischen Gründen mit Wasserdampf betrieben, ggf. mit überhitztem Wasserdampf unter Überdruck. Wird Wasserdampf, auch als Heizdampf bezeichnet, als Heizmedium verwendet, so kann eine Impulsbrechung des Heizdampfes außerhalb des Fallfilmverdampfers in einem Dampfdom oder Dampfgürtel 3 erfolgen. Um den Verdampfer gegen Erosion durch im Dampf mitgerissene Flüssigkeitstropfen zu schützen, kann auf der Zufuhrseite des Heizdampfes zusätzlich eine Jalousie zum Schutz der Verdampferrohre angeordnet sein.

Der Fallfilmverdampfer wird zur Vermeidung der Bildung von Eisenoxid- bzw. Magnetitpartikeln aus Edelstahl gefertigt, beispielsweise aus Edelstahl 1.4541 oder einem gleichwertigen Stahl.

Der erfindungsgemäß verwendete Verdampfer, insbesondere der in den Figuren dargestellte Fallfilmverdampfer, wird so mit zu verdampfender Flüssigkeit beschickt, daß über die gesamte Rohrlänge im Fallfilmverdampfer ein stabiler Flüssigkeitsfilm ausgebildet wird. Dazu kann die aus der Kolonne K1 mittels Pumpe P1 zugeführte Menge des Flüssigkeitsstromes entsprechend geregelt werden, wie auch die Temperatur des Heizmediums und der Druck auf der Dampfseite des Fallfilmverdampfers. Zur Verdampfung hochsiedender Substanzen kann erfindungsgemäß bei vermindertem Druck gearbeitet werden, insbesondere bei der Verdampfung von ethylenglykolhaltigen Flüssigkeiten.

Der Einfluß des Kontaktes zwischen dem Dampf der verdampfbaren oxidationsempfindlichen Verbindung und Eisen- bzw. Eisenoxidpartikeln, insbesondere Magnetitpartikeln, der der vorliegenden Erfindung zugrunde liegt, wird in den nachstehenden Beispielen erläutert.

### Beispiel 1:

In Laborversuchen wurde der Einfluß verschiedener Werkstoffe in einer Destillationsapparatur auf die Oxidation von Ethylenglykol, d.h. die Aldehydbildung, untersucht. Dazu wurden zunächst Destillationsversuche mit Ethylenglykol durchgeführt.

Die verwendete einfache Destillationsapparatur bestand aus einer Siedeblase mit Siedekapillare, einer Füllkörperkolonne (Länge 40 cm, Durchmesser 2,5 cm), einem absteigenden Kühler, einer Vorlage und einer Einrichtung zur Erzeugung von Unterdruck. In der Siedeblase wurde Ethylenglykol vorgelegt und bei 200 mbar und einer Temperatur von 150 - 160°C im Sumpf destilliert. Die Destillation wurde beendet, wenn 87 % des anfänglichen Sumpfes destilliert waren, d.h. 13 % Sumpf zurückblieben. Dabei betrug die Versuchsdauer etwa 2 Stunden. Die Kolonne enthielt Füllkörper. In verschiedenen Experimenten wurden als Füllkörper Ringe aus Glas, Edelstahl oder Eisen verwendet. Über die Siedekapillare wurde wahlweise Luft oder Stickstoff eingeperlt. In der nachstehenden Tabelle sind die Ergebnisse zusammengefaßt, wobei die Zahlenwerte den Gehalt an Aldehyd im Destillat bzw. Sumpf in ppm (Teile pro 1 Million Teile, parts per million) angeben.

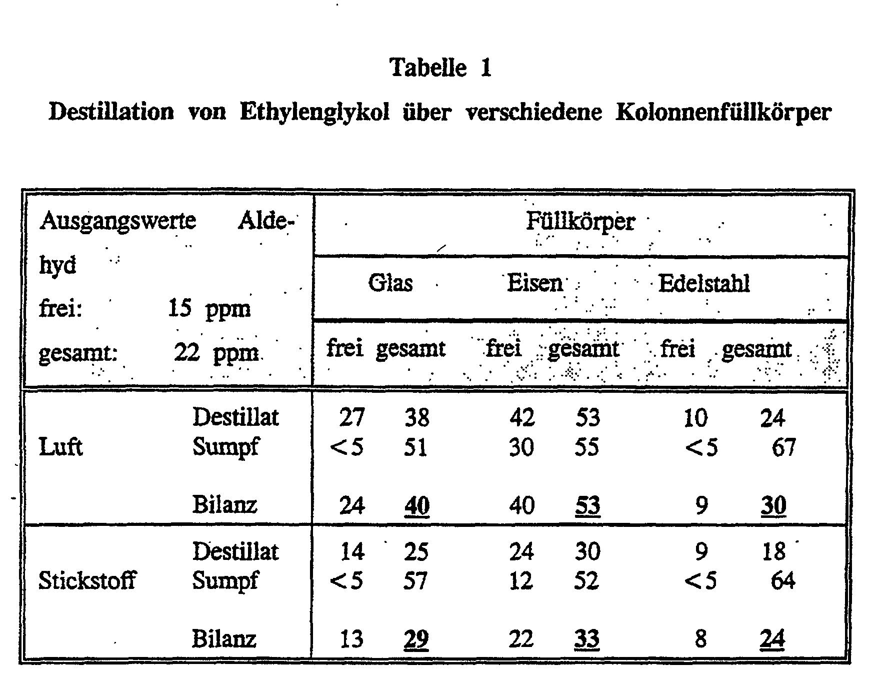

Die Bestimmung der Aldehydkonzentrationen erfolgte nach der "MBTH-Methode", wie sie beschrieben ist in E. Savicky et al, Analyt. Chem. 33, 93 - 96 (1961). Diese Methode dient der photometrischen Bestimmung von freiem und gebundenem Aldehyd. Der Unterschied zwischen freiem und Gesamtaldehyd ist dabei der sog. "gebundene Aldehyd", der vorliegend beispielsweise in Form von Acetalen vorliegt und somit der direkten Bestimmung nicht zugänglich ist.

Die angegebenen Bilanzwerte geben die jeweiliegen durchschnittlichen Gesamtaldehydgehalte im Ethylenglykol an, wobei das Sumpf/Destillat-Verhältnis von 13 : 87 berücksichtigt wurde.

Aus der Tabelle ist ersichtlich, daß beim Einperlen von Luft für alle verwendeten Füllkörper eine erhöhte Aldehydbildung auftrat.

Darüber hinaus ist die Aldehydbildung bei Eisenringen als Füllkörper am höchsten, bei Edelstahlringen als Füllkörper am niedrigsten. Die Auswahl des Werkstoffs für die Füllkörper hat somit einen Einfluß auf die Bildung von Aldehyd bei der Destillation von Ethylenglykol. Das Vorliegen von Eisenringen als Füllkörper fördert die Bildung von Aldehyd aus Ethylenglykol. Auf den Eisenringen als Füllkörpern wurde dabei die Bildung eines körnigen, leicht beweglichen schwarzen Belags beobachtet während der Destillation, während die Edelstahlringe nur anliefen.

### Beispiel 2:

In einem weiteren Experiment wurde Ethylenglykol in der vorstehend beschriebenen Apparatur unter Rückfluß erhitzt unter ansonsten gleichbleibenden Bedingungen. Somit wurde kein Ethylenglykol abdestilliert. Dies ermöglichte, einen Kontakt zwischen Dampfphase und untersuchtem Werkstoff als Füllkörper für einen längeren Zeitraum einzustellen.

In diesem Experiment wurde die Kolonne entweder als leere Glaskolonne oder als mit Eisendrehspänen betriebene Glaskolonne betrieben. Dies diente der Simulation eines "Rückflußkühlers" aus Eisen bzw. eines entsprechenden Verdampfers mit Gasphasenkontakt aus diesem Material. Die Versuchsergebnisse sind in Tabelle 2 wiedergegeben, wobei jeweils der Gesamtaldehydgehalt in ppm angegeben ist.

Die Ausgangskonzentration an Aldehyd betrug hierbei 23 ppm.

**Tabelle 2**

| Nr. | Füllkörper | Zeit [h] | Atmosphäre | Aldehyd [ppm] |
|---|---|---|---|---|
| 1 | Eisenspäne | 13 | Luft | 162 |
| 2 | Eisenspäne | 14 | Luft | 180 |
| 3 | Eisenspäne | 12 | Stickstoff | 40 |
| | | | | |
| 4 | Kontrollversuch ohne Eisenspäne | 20 | Luft | 38 |

Aus den bestimmten Aldehydgehalten ist ersichtlich, daß die Oxidation von Ethylenglykol bei Luftzutritt an einer Eisenoberfläche wesentlich stärker auftritt als bei entsprechenden Kontrollversuchen in der leeren Glaskolonne (Versuch Nr. 4) oder unter Stickstoffatmosphäre (Versuch Nr. 3). Aufgrund der längeren Verweil- bzw. Kontaktzeiten ist der Einfluß des verwendeten Materials im Kühler bzw. der Kolonne wesentlich ausgeprägter als im vorangehenden Beispiel. Aus dem Beispiel wird deutlich, daß der Kontakt der Dampfphase mit Eisen zu einer wesentlich verstärkten Bildung von Aldehyd als Oxidationsprodukt des Ethylenglykols führt.

### Beispiel 3:

Als weiterer Vergleichsversuch wurde Ethylenglykol in der vorstehend beschriebenen Apparatur unter Rückfluß erhitzt, wobei eine leere Glaskolonne verwendet wurde. Als Atmosphäre wurde Luft verwendet. Beim Rückflußkochen wurden im Sumpf Eisenspäne bzw. Stahlringe aus V2A- Stahl vorgelegt, die vollständig vom Sumpf bedeckt waren, also nicht mit der Gasphase in Berühung kommen konnten.

Der Aldehydgehalt im Sumpf betrug zu Anfang des Experiments 23 ppm. In der nachstehenden Tabelle sind die nach einer Versuchsdauer von 20 Stunden gemessenen Gesamtaldehydwerte angegeben.

**Tabelle 3**

| Nr. | Material | Atmosphäre | Aldehyd [ppm] |
|---|---|---|---|
| 1 | Glas | Luft | 38 |
| 2 | Eisen | Luft | 39 |
| 3 | V2A | Luft | 37 |

Aus den gemessenen Aldehydgehalten am Ende des Experiments wird deutlich, daß Eisen oder Stahl, der im Destillationssumpf vorliegt, aber nicht mit der Gasphase in Berührung kommen kann, keinen nennenswerten Einfluß auf die Oxidation von Ethylenglykol zu Aldehyd hat. Die Konzentration an Aldehyd änderte sich nicht bei Verwendung von getauchtem Eisen oder Stahl im Vergleich zur leeren Glasapparatur. Somit ist deutlich, daß die erhöhte Aldehydbildung bei der Verdampfung von Ethylenglykol in der Gasphase abläuft.

### Beispiel 4 (Vergleichsbeispiel):

In einer technischen Anlage zur Herstellung von Ethylenglykol wurde zur Verdampfung des anfallenden Ethylenglykol/Wasser-Gemisches ein herkömmlicher Fallfilmverdampfer verwendet, der aus kohlenstoffhaltigem Stahl hergestellt war. Beim Betrieb des Verdampfers stiegen die Aldehydgehalte im Verdampfungsprodukt auf über 50 ppm an.

### Beispiel 5:

Im technischen Verfahren zur Herstellung von Ethylenglykol gemäß Beispiel 4 wurde der herkömmliche Fallfilmverdampfer ersetzt durch einen Fallfilmverdampfer, wie er vorstehend als bevorzugte Ausführungsform beschrieben wurde. Die Anordnung entspricht dabei den in Fig. 1 - 3 gezeigten Anordnungen. Der Fallfilmverdampfer bestand aus Edelstahl 1.4541. Der Fallfilmverdampfer wurde in einer Fahrweise mit getrenntem Sumpf betrieben. Die Menge der dem Fallfilmverdampfer zugeführten Flüssigkeit wurde so eingestellt, daß am Ablauf der Rohre des Fallfilmverdampfers genügend Flüssigkeit zur Ausbildung eines stabilen Flüssigkeitsfilmes über den gesamten Umfang der Verdampfungsrohre des Fallfilmverdampfers vorhanden war. Die gleichmäßige Verteilung der Flüssigkeit wurde dabei erfindungsgemäß mittels des zweistufigen Lochkastenverteilers erreicht, wie er in Fig. 2 dargestellt ist. Die zur Verdampfung benötigte Energie wurde dabei von Heizdampf geliefert. Bei dem eingesetzten Fallfilmverdampfer war der untere Rohrboden wärmeisoliert ausgeführt, wie es vorstehend detailliert beschrieben ist. Dabei war der Raum zwischen den Rohren, dem unteren Rohrboden und dem Abdeckblech mit einem Isolationsmaterial ausgefüllt. Der Rohrboden war im erfindungsgemäß verwendeten Fallfilmverdampfer voll berohrt.

Im Verdampfer waren am unteren Rohraustritt Strömungsleitbleche angeordnet, wie sie in Fig. 3 dargestellt sind.

Die Verwendung des erfindungsgemäßen Fallfilmverdampfers führte zu einem Aldehydgehalt, der auch nach Verfahrensführung über einen langen Zeitraum kleiner als 10 ppm blieb.

Aus den vorstehend angegebenen Versuchsergebnissen wird deutlich, daß durch Verhindern des direkten Kontaktes zwischen einer gebildeten Dampfphase einer verdampfbaren oxidationsempfindlichen Verbindung und einer im Verdampfer vorliegenden erhitzten festen Oberfläche die Oxidation der oxidationsempfindlichen Verbindung stark vermindert werden kann. Dies kann insbesondere dadurch erreicht werden, daß die gesamte erhitzte feste Oberfläche mit der zu verdampfenden Flüssigkeit in Kontakt steht. Gemäß einer Ausführungsform der Erfindung führt die Verhinderung des Kontaktes von im System vorliegendem Eisen- oder Eisenoxidpartikeln, wie Magnetitpartikeln, zu einer effektiveren Verdampfung mit geringerer Bildung von Oxidationsprodukten.

## Patentansprüche

1. Fallfilmverdampfer, umfassend eine heizbare feste Oberfläche (16) in Form von Verdampferrohren, eine Vorrichtung (2, 3) zum Erhitzen der Verdampferrohre und eine Vorrichtung (10) zum Zuführen einer verdampfbare Verbindungen enthaltenden Flüssigkeit zu den Verdampferrohren, wobei die Vorrichtung zum Zuführen der Flüssigkeit, die einen oder mehrere hintereinander geschaltete Lochkastenverteiler (12, 14) umfaßt, so ausgebildet und im Verdampfer angeordnet ist, daß im wesentlichen die gesamte heizbare Oberfläche der Verdampfrohre im Betrieb mit der Flüssigkeit in Kontakt steht, dadurch gekennzeichnet, daß der obere Rohrboden (17) und/oder der untere Rohrboden (26) wärmeisoliert sind.

2. Verdampfer nach Anspruch 1, dadurch gekennzeichnet, daß die heizbare feste Oberfläche (16) aus korrosionsbeständigem Stahl besteht.

3. Verwendung eines Verdampfers, wie er in Anspruch 1 oder 2 beschrieben ist, als Sumpfverdampfer einer Rektifizierkolonne (K1).

4. Verfahren zur Verdampfung von einer Glykole enthaltenden Flüssigkeit in einem Verdampfer, in dem die Flüssigkeit zur Verdampfung in Kontakt mit einer erhitzten festen Oberfläche gebracht wird, dadurch gekennzeichnet, daß ein Verdampfer gemäß einem der Ansprüche 1 oder 2 eingesetzt wird, in dem im wesentlichen die gesamte erhitzte feste Oberfläche von der Flüssigkeit vollständig benetzt wird.

5. Verfahren nach Anspruch 4, dadurch gekennzeichnet, daß das Glykol Ethylenglykol ist und die Flüssigkeit Wasser enthält.

6. Verfahren zur Herstellung von hochreinen Glykolen, dadurch gekennzeichnet, daß das Verfahren einen Verdampfungsschritt gemäß Anspruch 4 oder 5 umfaßt.

## Claims

1. A falling-film evaporator comprising a heatable solid surface (16) in the form of evaporator tubes, an apparatus (2, 3) for heating the evaporator tubes and an apparatus (10) for feeding a liquid containing vaporizable compounds to the evaporator tubes, the apparatus for feeding the liquid, which comprises one or more perforated box distributors (12, 14) connected in series, being formed, and arranged in the evaporator, in such a way that essentially the total heatable surface of the evaporator tubes is in contact with the liquid during operation, wherein the upper tube bottom (17) and/or the lower tube bottom (26) are heat-insulated.

2. An evaporator as claimed in claim 1, wherein the heatable solid surface (16) consists of corrosion-resistant steel.

3. The use of an evaporator as described in claim 1 or 2 as a bottom evaporator of a rectification column (K1).

4. A process for evaporating a liquid containing glycols in an evaporator in which, for evaporation, the liquid is brought into contact with a heated solid surface, wherein an evaporator as claimed in either of claims 1 and 2 is used, in which essentially the total heated solid surface is completely wet by the liquid.

5. A process as claimed in claim 4, wherein the glycol is ethylene glycol and the liquid contains water.

6. A process for the preparation of highly pure glycols, which comprises an evaporation step as claimed in claim 4 or 5.

## Revendications

1. Evaporateur à pellicule descendante comprenant une surface solide chauffable (16) présentant la forme de tubes vaporiseurs, un dispositif (2, 3) pour chauffage des tubes vaporiseurs et un dispositif (10) pour amener un liquide contenant des composés vaporisables aux tubes vaporiseurs, dans lequel le dispositif servant à amener le liquide, qui comprend un ou plusieurs répartiteurs à caisses perforées (12, 14) disposés les uns derrière les autres, est conçu et disposé dans le vaporiseur en sorte que toute la surface chauffable des tubes vaporiseurs soient en contact, au fonctionnement, avec le liquide, caractérisé par le fait que le plateau porte-tubes supérieur (17) et/ou le plateau porte-tubes inférieur (26) sont isolés de la chaleur.

2. Vaporiseur selon la revendication 1, caractérisé par le fait que la surface solide chauffable (16) consiste en acier résistant à la corrosion.

3. Utilisation d'un vaporiseur tel que décrit dans la revendication 1 ou 2 en tant que vaporiseur de fond de liquide d'une colonne à rectifier (K1).

4. Procédé pour vaporiser un liquide contenant des glycols dans un vaporiseur dans lequel le liquide est mis en contact pour la vaporisation avec une surface solide chauffée, caractérisé par le fait que l'on utilise un évaporateur selon l'une des revendications 1 ou 2 dans lequel toute la surface solide chauffée est totalement mouillée par le liquide.

5. Procédé selon la revendication 4, caractérisé par le fait que le glycol est l'éthylène-glycol et le liquide contient de l'eau.

6. Procédé pour la préparation de glycols à haute pureté caractérisé par le fait que ce procédé comprend un stade vaporisation selon la revendication 4 ou 5.
